Europäisches Patentamt

European Patent Office

Office européen des brevets

(19)

(11) Veröffentlichungsnummer: **0 258 459**
A1

(12) **EUROPÄISCHE PATENTANMELDUNG**
Veröffentlicht nach Art. 158 Abs. 3 EPÜ

(21) Anmeldenummer: 87901768.9

(22) Anmeldetag: 05.02.87

Daten der zugrundeliegenden internationalen Anmeldung:

(86) Internationale Anmeldenummer:
PCT/SU87/00016

(87) Internationale Veröffentlichungsnummer:
WO87/04839 (13.08.87 87/18)

(51) Int. Cl.³: **G 11 B 7/00**

(30) Priorität: 07.02.86 SU 3134136

(43) Veröffentlichungstag der Anmeldung:
09.03.88 Patentblatt 88/10

(84) Benannte Vertragsstaaten:
AT BE CH DE FR GB IT LI LU NL SE

(71) Anmelder: INSTITUT PROBLEM MODELIROVANIA V
ENERGETIKE AKADEMII NAUK UKRAINSKOI SSR
pr. Pobedy, 56
Kiev, 252680(SU)

(72) Erfinder: PETROV, Vyacheslav Vasilievich
ul. Montazhnikov, 104
Kiev, 252069(SU)

(72) Erfinder: GRINKO, Dmitry Alexandrovich
ul. Akademika Dobrokhotova, 4-71
Kiev, 252142(SU)

(72) Erfinder: ANTONOV, Alexandr Alexandrovich
pr. Vernadskogo, 85-64
Kiev, 252142(SU)

(72) Erfinder: KRJUCHIN, Andrei Andreevich
ul. Juliusa Fuchika, 8-13
Kiev, 252049(SU)

(74) Vertreter: Lehn, Werner, Dipl.-Ing. et al,
Hoffmann, Eitle & Partner Patentanwälte Arabellastrasse
4
D-8000 München 81(DE)

(54) VERFAHREN ZUM PHOTOTHERMISCHEN SPEICHERN, LESEN UND AUSSTREICHEN VON INFORMATIONEN.

(57) A method of photothermal recording, reading and erasing of information consists in imparting a charge to the surface of a recording medium (1) and subsequently influencing that medium with a modulated electromagnetic beam (8) localized down to a size of the same order of magnitude as that of the information unit and having an energy which, during the photothermal processes of recording and erasing of information, is larger than that needed for softening but less than that needed for destroying the material of the recording medium (1), and during the process of reading less than the energy needed for softening that material, the surface of the recording medium (1) being discharged before erasure.

FIG.3

VERFAHREN ZUM FOTOTHERMISCHEN AUFZEICHNEN,
LESEN UND LÖSCHEN VON INFORMATIONEN

## Gebiet der Technik

Die vorliegende Erfindung betrifft Methoden zum Aufzeichnen, Lesen und Löschen von Informationen, welche auf relativer Verschiebung eines Informationsträgers und einer Quelle elektromagnetischer Strahlungseinwirkung beruhen, und bezieht sich insbesondere auf ein Verfahren zum fotothermischen Aufzeichnen, Lesen und Löschen von Informationen.

## Stand der Technik

Die Erfindung ist der Lösung eines der Hauptprobleme der fotothermischen Aufzeichnung und Speicherung von digitalen Informationen mit Hilfe optischer Speichereinrichtungen, der Organisation von Löschvorgängen und der wiederholten Informationsaufzeichnung gewidmet. Die zur Zeit bestehenden Methoden zur reversiblen Aufzeichnung von Informationen, welche umkehrbare magnetooptische und strukturelle Umwandlungen in Aufzeichnungsmedien auf Basis von Chalkogenidgläsern ausnutzen, sind sehr schwer realisierbar.

Es ist ein Verfahren zum fotothermischen Aufzeichnen , Lesen und Löschen von Informationen auf Basis eines hydrodynamischen Effektes bei der Erhitzung von Flüssigkeits-Dünnfilmen (A.K. Kartuzhansky "Neserebryanye fotograficheskie protsessy /Silberfreie fotografische Prozesse/ ", 1984, Verlag "Khimia", Leningrad, S.231 bis 232) bekannt, nach dem man die der aufzuzeichnenden Information entsprechenden, durch die Temperaturabhängigkeit der Oberflächenenergie dieses Filmes bedingten Änderungen des Reliefs der Filmoberfläche durch Bestrahlung mit einer Strahlung erhält, die vom Film absorbiert wird.

Das bekannte Verfahren zum fotothermischen Aufzeichnen, Lesen und Löschen von Informationen sichert eine geringe Informationsspeicherdauer sowie weist eine niedrige Empfindlichkeit und eine kleine Auflösung auf, welche durch die hydrodynamischen Quasig-

- 2 -

leichgewichtsrelaxation des Flüssigkeitsfilmes bestimmt sind.

Ferner ist ein Verfahren zum fotothermischen Aufzeichnen, Lesen und Löschen von Informationen (A.L. Kartuzhansky "Neserebryanye fotograficheskie Protsessy /Silberfreie fotografische Prozesse)", 1984, Khimia", Leningrad, S. 46 bis 49) bekannt, nach dem auf der Filmoberfläche des Aufzeichnungsmediums zuerst ein Ladungsrelief durch vorherige gleichmässige Aufladung dieser Oberfläche mit Hilfe einer Koronaentladung und durch anschliessende Projizierung des aufzuzeichnenden Bildes in einem der Fotoleitfähigkeit des Filmmaterials entsprechenden Spektralbereich auf die obengenannte Oberfläche erzeugt wird. Alsdann wird das latente Bild durch gleichzeitige Erweichung des gesamten Filmes, z.B. durch Erwärumung, entwickelt und beispielsweise durch dessen Abkühlung fixiert. Das im genannten Verfahren aufgezeichnete Bild wird durch die wiederholte Erweichung des Aufzeichnungsmediums gelöscht.

Bei dem bekannten Verfahren ist eine vielfache Überschreibung von Informationen möglich, wobei eine hohe Empfindlichkeit und eine grosse Informationsspeicherdauer gewährleistet ist. Beim bekannten Verfahren treten jedoch ein durch die Eigenverformungen der fotoplastischen Materialien bedingter hoher Rauschpegel, eine durch die Aufladezeit für die Filmoberfläche, durch eine kleine Beweglichkeit der Ladungsträger des fotoplastischen Materials und durch die Zeit der thermischen Relaxation des Aufzeichnungsmediums begrenzte grosse Zeitdauer eines Schreib-Lösch-Zyklkus, eine begrenzte Auflösung, die es nicht erlaubt, die Information mit einer durch das Auflösungsvermögen der optischen Systeme gewährleisteten Dichte aufzuzeichnen, und ein verhältnismässig schmaler Durchlassbereich in Erscheinung. Diese Besonderheiten resultieren aus den ausgenutzten Mechanismen der Erzeugung des latenten Bildes und der gleichzeitigen Entwicklung des Bildes über die gesamte Filmoberfläche. Zur Durchführung dieses bekannten Verfahrens ist die Erzeugung eines latenten Bildes erforderlich, das eine sich gleichzeitig über die gesamte Filmoberfläche entsprechend der Helligkeit des auf die Oberfläche zu projizierenden Bildes ändernde Dichte der Oberflächenladung darstellt. Dieser Vorgang nimmt eine beträchtliche Zeit in Anspruch und wird als eine der Rauschquellen angesehen. Die Entwicklung des latenten Bildes nimmt man durch gleichzeitige Erweichung des ganzen Filmes vor, wodurch im Relief nicht nur das latente Bild sondern auch Geräusche auftreten können und eine beträchtliche Zeit für die Erwärmung und Abkühlung des ganzen Aufzeichnungsmediums benötigt wird. Also sichert dieses bekannte Verfahren keine optimalen Bedingungen für die Verformung des Filmes bei der fotothermischen Aufzeichnung und Löschung einer Informationseinheit und erlaubt es nicht, die fotothermische Aufzeichnung und Löschung der bis auf einen durch die Auflösung der optischen Systeme festgelegten Grenzbereich lolalisierten Informationseinheit zu verwirklichen.

Am nächsten kommt der vorliegenden Erfindung ein Verfahren zum fotothermischen Aufzeichnen, Lesen und Löschen von Informationen ("Zweite wissenschaftlichtechnische Allunionskonferenz", 1985, Tsentralnoe i gruzinskoe respublikanskoe pravlenic nauchno-tekhnicheskogo obschestva radiotekhniki, elektroniki i svjazi imeni A.S. Popova (Moskau), S. 62 bis 63), nach dem die Information durch Bestrahlung eines zum Zerfliessen über das Substrat im schmelzflüssigen Zustand befähigten Aufzeichnungsmediums mit einer modulierten, auf etwa die gleiche Grösse wie die der Informationseinheit eingegrenzten elektromagnetischen Strahl aufgezeichnet wird, durch den das Aufzeichnungsmedium erschmolzen und verformt wird, worauf die entstandenen lokalisierten Informationseinheiten in Form eines nach der Tiefe zweistufigen Reliefs, d.h. Pits (englische Bezeichnung ebenso wie "Grübchen"), durch die Abkühlung des Aufzeichnungsmediums fixiert werden. Damit wird der Vorgang der fotothermischen Informationsaufzeichnung beendet. Das Lesen der Pits erfolgt mit einem fokussierten elektromagnetischen Strahl. Die aufgezeichnete Information löscht man durch anschliessende gleichzeitige Erwärmung der gesamten Oberfläche des Aufzeichnungsmediums.

Beim bekannten Verfahren kann eine diskrete fotothermische Aufzeichnung und Löschung von Informationen während kurzer Zeitspannen , die durch die Zeitdauern der elektromagnetischen Impulse bestimmt werden, mit einer für die optischen Systeme maximalen Dichte und einem hohen Signal/Rausch-Verhältnis vorgenommen werden. Jedoch zeichnet sich das bekannte Verfahren durch eine niedrige Zuverlässigkeit der Informationsverarbeitung und eine geringe Überschreibzykluszahl aus. Das folgt daraus, dass an das Aufzeichnungsmedium eine Reihe einander widersprechender Forderungen durch die Schreib-Lösch-Vorgänge gestellt wird. Da das Aufzeichnungsmedium in der Tat durch einen vorhandenen Gradienten von Oberflächenspannkräften und hydrodynamischen Spannungen verformt wird, muss es auf eine Temperatur erhitzt werden, die seinen Schmelzpunkt beträchtlich überschreitet, um die zähelastische Eigenschaften des Aufzeichnungsmediums zu verbessern und die Wahrscheinlichkeit, mit der die Keime der Pits(Grübchen) gebildet werden, zu vergrössern. Derartige Temperatur führt aber zu einer beschleunigten Zerstörung des Aufzeichnungsmediums, weshalb sich die realisierbare Überschreibzykluszahl als ziemlich klein erweist. Zur Erwärmung des Aufzeichnungsmediums müssen während der Informationsaufzeichnung starke Laser kontinuierlicher Strahlung verwendet werden, was das Gewicht und die Abmessungen der jeweiligen Geräte zum fotothermischen Aufzeichnen, Lesen und Löschen von Informationen erheblich vergrössert. Um die Leistung der Strahlungseinwirkung auf das Aufzeichnungsmedium herabzusetzen, scheint es notwendig zu sein, Aufzeichnungsmedien mit Dünnschichten, die eine geringe Oberflächenenergie besitzen, d.h. aus Materialien gefertigt sind, die das Substrat im flüssigen Zustand nicht benetzen, zu verwenden. Aber das widerspricht den an die Schichten des Aufzeichnungsmediums durch den Informationslöschvorgang gestellten Anforderungen, der Anforderung an die Standfestigkeit des Aufzeichnungsmediums gegenüber äusseren Einflüssen in der Betriebsart der Informationsspeicherung. Beim bekannten Verfahren wird ein Aufzeichnungsmedium mit einem Wert der Oberflächenenergie benutzt, die sich bei der Informationsaufzeichnung, -löschung und - speicherung nicht regeln lässt. Die an den Wert der Oberflächenenergie des Aufzeichnungsmediums durch die Schreib-und Löschvorgänge gestellten Anforderungen stehen im Widerspruch zueinander. Um die Bedingungen für das Aufzeichnen, Lesen und Löschen von Informationen zu optimieren, muss während der Aufzeichnung der Wert der Oberflächenenergie vermindert und beim Löschen vergrössert werden.

Das bekannte Verfahren bietet keine Möglichkeit, den Wert der Oberflächenenergie der Schicht des Aufzeichnungsmediums beim Aufzeichnen, Lesen und Löschen von Informationen zu ändern und die optimalen Bedingungen für die Durchführung dieser Vorgänge zu schaffen.

Offenbarung der Erfindung

Der Erfindung ist die Aufgabe zugrundegelegt, ein solches Verfahren zum fotothermischen Aufzeichnen, Lesen und Löschen von Informationen zu entwickeln, das eine Änderung der Oberflächenenergie des Aufzeichnungsmediums ermöglicht, was die Möglichkeit einer Änderung der Grösse, mit der der elektromagnetische Strahl auf das Aufzeichnungsmedium einwirkt, gibt und eine Zerstörung des Materials des Aufzeichnungsmediums verhindert, wodurch die optimalen Bedingungen für die Verformung des Aufzeichnungsmediums beim fotothermischen Aufzeichnen, Lesen und Löschen von Informationen geschaffen , die Zuverlässigkeit beim fotothermischen Aufzeichnen, Lesen und Löschen der Information erhöht und die Überschreibzykluszahl wesentlich vergrössert sowie die Masse und die Abmessungen optischer Geräte zum fotothermischen Aufzeichnen, Lesen und Löschen von Informationen verringert werden.

Das Wesen der Erfindung besteht darin, dass im fotothermischen Verfahren zum Aufzeichnen, Lesen und Löschen von Informationen, bei dem zur Erzeugung einer jeden Informationseinheit aus einer Reihenfolge von Informationseinheiten mit einem nach der Tiefe zweistufigen Relief auf dem Aufzeichnungsmedium, das auf einem Substrat angeordnet ist, im Vorgang der fotothermischen Informationsaufzeichnung sowie zum Lesen und Löschen der Information durch einen modulierten, auf etwa die gleiche Grösse wie die der Informationseinheit - eines Pitslokalisierten elektromagnetischen Strahl auf dieses Aufzeichnungsmedium eingewirkt wird, das aus einem Werkstoff gefertigt ist, der zum Zerfliessen über das Substrat im erweichten Zustand befähigt ist, gemäss der Erfindung vor der fotothermischen Informationsaufzeichnung auf die Oberfläche des Aufzeichnungsmediums eine Ladung gebracht wird, wobei die Einwirkung auf das Aufzeichnungsmedium mit dem auf etwa die gleiche Grösse wie die der Informationseinheit lokalisierten elektromagnetischen Strahl zum fotothermischen Aufzeichnen und Löschen mit einer Energie, die grösser als die Energie der Erweichung des Werkstoffes des Aufzeichnungsmediums, aber geringer als die Energie der Zerstörung des Werkstoffes des Aufzeichnungsmediums ist, und zum Lesen der Information mit einer Energie, ausgeübt wird, die geringer als die Energie der Erweichung des Wersstoffes des Aufzeichnungsmediums ist, und vor dem Informationslöschen die Oberfläche des Aufzeichnungsmediums entladen wird.

- 7 -

Unter dem Fachausdruck "Energie der Erweichung des Werkstoffes des Aufzeichnungsmediums" versteht man eine Energie, die dem Werkstoff des Aufzeichnungsmediums zu dessen Erweichung erteilt werden muss; unter dem Fachausdruck "Energie der Zerstörung des Werkstoffes des Aufzeichnungsmediums " wird eine Energie verstanden, die dem Werkstoff des Aufzeichnungsmediums zu dessen Zerstörung erteilt werden muss.

Die Erfindung gestattet es, die Kennwerte des Aufzeichnungsmediums beim fotothermischen Aufzeichnen, Lesen und Löschen von Informationen zu steuern und hochzuverlässige Speichereinrichtungen mit einer geringen Masse und kleinen Abmessungen aufzubauen.

Kurzbeschreibung der Zeichnungen

Im weiteren wird die Erfindung an Hand eines konkreten Ausführungsbeispiels, das die Durchführung des Verfahrens zum fotothermischen Aufzeichnen, Lesen und Löschen von Informationen belegt, unter Bezugnahme auf die beigefügten Zeichnungen näher erläutert. Es zeigen:

Fig. I einen Abschnitt eines Aufzeichnungsmediums mit einer diskreten Aufzeichnung in Form eines nach der Tiefe zweistufigen Relief gemäss der Erfindung;

Fig. 2 einen Abschnitt des Aufzeichnungsmediums mit einer kontinuierlichen Aufzeichnung in Form eines nach der Tiefe zweistufigen Relief gemäss der Erfindung;

Fig. 3 einen Längsschnitt durch eine konstruktive Ausführungsform eines optischen Speichers zum fotothermischen, Lesen und Löschen von Informationen mit einem zur Aufrechterhaltung einer Koronaentladung dienenden Faden gemäss der Erfindung;

Fig. 4 einen Längsschnitt durch eine weitere konstruktive Ausführungsform eines optischen Speichers zum fotothermischen Aufzeichnen, Lesen und Löschen von

- 8 -

Informationen mit einem Elektronenemitter gemäss der
Erfindung.

Beste Ausführungsform der Erfindung

Nach dem erfindungsgemässen Verfahren zum fotothermischen Aufzeichnen, Lesen und Löschen von Informationen
wird vor dem fotothermischen Informationsaufzeichnen
eine Ladung auf die Oberfläche des Aufzeichnungsmediums
gebracht, dessen Werkstoff sowohl ein Halbleiter wie
auch ein Dielektrikum sein kann. Der Werkstoff des
Aufzeichnungsmediums muss zum Zerfliessen über das Substart im erweichten Zustand befähigt sein. Zum Bringen
einer Ladung auf die Oberfläche des Aufzeichnungsmediums
können thermische Elektronenemission, Koronaentladung
ausgenutzt werden. Die Oberflächenenergie des geladenen
Aufzeichnungsmediums stellt eine Summe aus der Oberflächenenergie des ungeladenen Aufzeichnungsmediums
und einer Energie, mit der die darauf gebrachten Ladungen miteinander in Wechselwirkung treten, dar.
Da die Wechselwirkungsenergie der gleichnamigen Ladungen negativ ist, erweist sich die Energie des geladenen Aufzeichnungsmediums als kleiner gegenüber der
Energie der ungeladenen Aufzeichnungsmediums. Somit
nimmt bei der Bildung einer Oberflächenladung des Aufzeichnungsmediums durch Wechselwirkung der gebrachten
Ladungen die Oberflächenenergie des Aufzeichnungsmediums ab, welche sogar negativ werden kann. Jedoch
entwickeln sich die Instabilitäten des Aufzeichnungsmediums zu einem nach der Tiefe zweistufigen grübchenförmigen Relief (entweder ist ein Pit da oder es gibt
keins, die Tiefe sämtlicher Pits ist aber gleich) nur
in dem Gebiet, wo das Aufzeichnungsmedium demnächst
z.B. durch eine Laserstrahlung aufgeschmolzen wird.

Zur Bildung jeder Informationseinheit aus einer
Reinhenfolge von Informationseinheiten mit einem nach
der Tiefe zweistufigen Relief auf dem auf das Substrat
aufgetragenen Aufzeichnungsmedium wird auf dieses im Vorgang der fotothermischen Aufzeichnung durch einen auf etwa die gleiche Grösse wie die der Informationseinheit - eines Pits - lokalisierten elektromagnetischen Strahl mit einer Energie eingewirkt, die grösser als die Energie der Erweichung des Werkstoffes des Aufzeichnungsmediums, aber geringer als die Energie der Zerstörung des Werkstoffes des Aufzeichnungsmediums ist. Dabei können verschiedene Varianten der Organisation der fotothermischen Informationsaufzeichnung realisiert werden. Bei diskreter fotothermischer Informationsaufzeichnung kann der Laserstrahl nach der Intensität, Querschnittsfläche, seiner Bewegungsbahn moduliert werden.

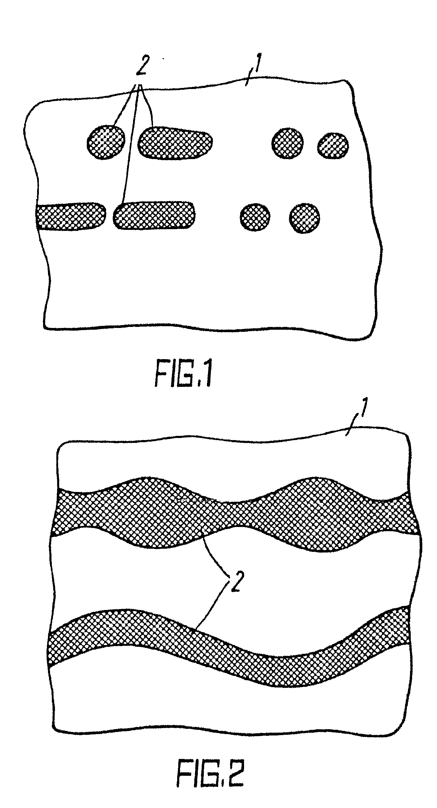

Fig. 1 zeigt einen Abschnitt des Aufzeichnungsmediums mit diskreter Aufzeichnung in Form eines nach der Tiefe zweistufigen Relief, das Pits 2 darstellt.

Bei der analogen fotothermischen Informationsaufzeichnung kann der Laserstrahl z.B. nach seiner Breite moduliert werden. In Fig. 2 ist ein Abschnitt des Aufzeichnungsmediums I mit analoger Aufzeichnung in Form eines nach der Tiefe zweistufigen Relief abgebildet, das Pits 2 repräsentiert.

Die Verminderung der Oberflächenenergie des Aufzeichnungsmediums bei der fotothermischen Informationsaufzeichnung ermöglicht eine Erwärmung des Aufzeichnungsmediums durch den elektromagnetischen Strahl auf eine Temperatur, die kleiner als die Zerstörungstemperatur des Aufzeichnungsmediums ist, bietet die Möglichkeit, unumkehrbare Vorgänge im Aufzeichnungsmedium zu vermeiden, wodurch die Zykluszahl der Informationsüberschreibung vergrössert wird. Die Oberflächenenergie des ungeladenen Aufzeichnungsmediums kann dabei einen bedeutenden Wert haben, was es gestattet, das Aufzeichnungsmedium zu verwenden, das das Substrat im schmelzflüssigen Zustand gut benetzt und ein hohes Adhäsionsvermögen gegenüber dem Substrat im festen Zustand aufweist. Daher wird bei der Informationsspeicherung, bei welcher das Aufzeichnungsmedium (von selbst durch Leckströme in diesem, durch eine Koronaentladung, deren Polarität der Polarität der Ladung vor der Betriebsart der fotothermischen Aufzeichnung bei Aufzeichnungsmedien aus dielektrischem Material entgegengesetzt ist) entladen ist, nimmt die Standfestigkeit des Aufzeichnungsmediums gegen Löschwirkungen zu.

Im Lesebetrieb wird auf das Aufzeichnungsmedium durch einen auf etwa die gleiche Grösse wie die der Informationseinheit eingegernzten elektromagnetischen Strahl mit einer Energie eingewirkt, die beträchlich geringer als die Energie der Erweichung des Werkstoffes des Aufzeichnungsmediums ist. Hierbei kann sich das Aufzeichnungsmedium sowohl im geladenen als auch im entladenen . Zustand befinden. Die Einwirkung mit einer solchen Energie auf den Werkstoff des Aufzeichnungsmediums führt zu keiner Änderung der Charakteristiken dieses Werkstoffes.

Um bei der Informationslöschung eine hohe Benetzbarkeit des Substrates des Aufzeichnungsmediums zu gewährleisten, wird es vorher entladen. Dann wird durch einen auf etwa die gleiche Grösse wie die der Informationseinheit lokalisierten elektromagnetischen Strahl, z.B. einen Laserstrahl, mit einer Energie eingewirkt, die grösser als die Energie der Erweichung des Aufzeichnungsmediums, aber geringer als die Energie der Zerstörung des Werkstoffes des Aufzeichnungsmediums ist.

Also ist durch das Bringen einer Ladung auf die Oberfläche des Aufzeichnungsmediums die Möglichkeit gegeben, die Oberflächenenergie des Aufzeichnungsmediums zu ändern, was es gestattet, die Grösse zu ändern, mit der der elektromagnetische Strahl auf das Aufzeichnungsmedium einwirkt, und dadurch eine Zerstörung des Werkstoffes des Aufzeichnungsmediums beim fotothermischen Aufzeichnen, Lesen und Löschen von Informationen zu verhindern.

- 11 -

Dadurch wird die Zuverlässigkeit beim fotothermischen Aufzeichnung, Lesen und Löschen der Information erhöht und die Zykluszahl der Informationsüberschreibung wesentlich vergrössert sowie werden die Masse und die Abmessungen der Geräte zum Aufzeichnen, Lesen und Löschen von Informationen verringert.

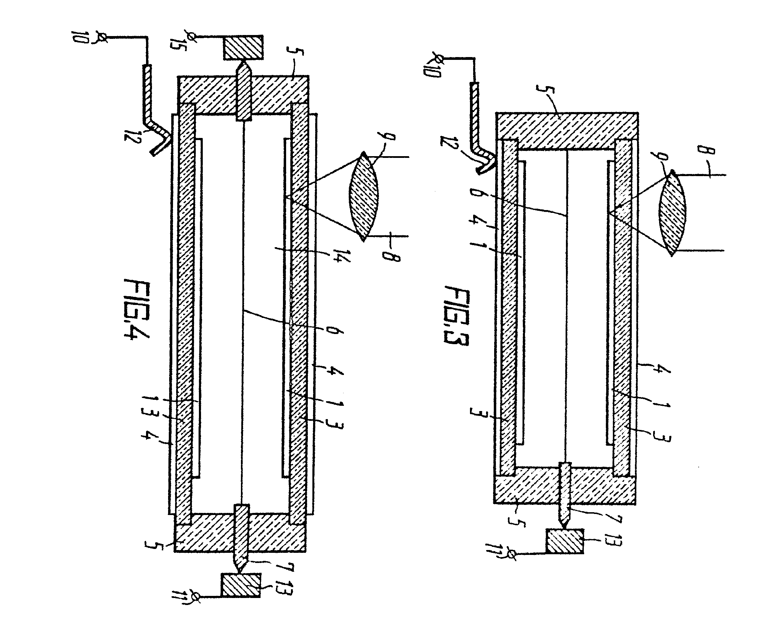

Der optische Speicher zum fotothermischen Aufzeichnen, Lesen und Löschen von Informationen enthält einen Zylinder 3 (Fig. 3), der aus einem durchsichtigen Werkstoff hergestellt ist, auf dessen Innenfläche eine Schicht des Aufzeichnungsmediums I aufgebracht ist. Auf die Aussenfläche des Zylinders 3 ist eine durchsichtige Leitschicht 4 aufgebracht. In Achsrichtung des Zylinders ist an Isolierdeckeln 5 eine Mittelelektrode 6 befestigt. In Fig. 3 stellt die Mittelelektorde 6 einen Faden dar. In den Deckeln 5 sind eine oder zwei Stromzuführungen 7 für die Mittelelektrode 6 befestigt. Der Zylinder 3 ist hermetisch abgedichtet und kann bei Ausnutzung der Koronaentladung zum Aufladen des Aufzeichnungsmediums I mit einem $I_{n}$ertgas gefüllt sein. Für die fotothermische Informationsaufzeichnung wird ein auf etwa die gleiche Grösse wie die der Informationseinheit lokalisierter elektromagnetischer Strahl 8, z.B. Laserstrahl verwendet, der auf dem Aufzeichnungsmedium I durch ein Objektiv eingegernzt wird. Die relative Verschiebung des Objektivs 9 und des Zylinders 3 zum Übergang von einem aufgezeichneten Pit zu einem anderen wird durch ein Positioniersystem (nicht gezeigt) vorgenommen. Die für die Koronaentladung benötigte Potentialdifferenz mit gleichem Vorzeichen wird an Klemmen 10 und II angelegt und von ihnen über einen Federkontakt 12 auf die durchsichtige Leitschicht 4 und über einen Kontakt 13 und die Stromzuführung 7 auf die sprühenden Mittelelektrode 6 weitergegeben.

Die in Fig. 4 gezeigte Bauart der Einrichtung zum fotothermischen Aufzeichnen, Lesen und Löschen von Informationen nach dem erfindungsgemässen Verfahren unterscheidet sich von der vorhergehenden dadurch, dass als Mittelelektrode 6 ein Elektronenemitter benutzt ist. In dieser Ausführungsform der Einrichtung kann zum Aufladen des Aufzeichnungsmediums I die thermische Elektronenemission herangezogen werden. In diesem Fall wird an die Klammen 10 und II eine entsprechende Potentialdifferenz angelegt, während der Innenraum 14 des Zylinders I evakuiert ist. Wird an die Klemme 15 ein gegenüber der Klemme 10 hohes negatives Potential angelegt, dann wandern die zu emittierenden Elektronen auf die Oberfläche des Aufzeichnungsmediums I und laden damit diese Oberfläche auf. Um eine Entladung des Aufzeichnungsmediums I nach dem Aufheben der Potentialdifferenz an den Klemmen 10, 11 und 15 zu ermöglichen, sind als Aufzeichnungsmedium Halbleiter zu benutzen.

Die optische Speichereinrichtung zum fotothermischen Aufzeichnen, Lesen und Löschen funktioniert wie folgt.

Der Zylinder 3 (Fig. 3) wird um seine Achse mit Hilfe eines Elektromotors (nicht gezeight) in Drehung versetzt und wird relativ zum Objektiv 9 durch das Positioniersystem bewegt.

An die Klemmen 10, 11 wird ein Potentialdifferenz mit gleichem Vorzeichen angelegt und in einer entstehenden Koronaentladung eine Ladung auf die Oberfläche des Aufzeichnungsebene I gebracht. Zur fotothermischen Aufzeichnung einer Information wird durch das Positioniersystem der Zylinder 3 nach der gewünschten Adresse verschoben. Der auf etwa die gleiche Grösse wie die der Informationseinheit lokalisierte Strahl 8 wirkt auf das Aufzeichnungsmedium I zur Bildung eines Pits ein. Alsdann verschiebt das Positioniersystem den Zylinder 3 entsprechend einer neuen Adresse, und das Pit kann nach der Einwirkung des modulierten, auf etwa die gleiche Grösse wie die der Informationseinheit lokalisierten Laserstrahls 8 auf das Aufzeichnungsmediums I wiederaufgezeichnet werden. Auf solche Weise können in den benachbarten Gebieten des Aufzeichnungsmediums I mehrere Informationseinheiten-Pits geschrieben werden. Dabei muss die Energie eines solchen Laserstrahls 8 grösser als die Energie der Erweichung des Werkstoffes des Aufzeichnungsmediums I, aber geringer als die Energie der Zerstörung des Werkstoffes des Aufzeichnungsmediums I sein. Zum Lesen einer Information trifft auf das Aufzeichnungsmedium I ein modulierter, auf etwa die gleiche Grösse wie die der Informationseinheit lokalisierter Laserstrahl 8 mit einer Leistung auf, die beträchtlich geringer ist, als es zur Aufzeichnung eines Pits erforderlich ist. Die Energie dieses Laserstrahls 8 ist kleiner als die Energie der Erweichung des Wersktoffes des Aufzeichnungsmediums I. Der vom Aufzeichnungsmedium I zurückgeworfene Strahl wird registriert. Die Intensität des zurückgeworfenen Strahls wird entsprechend dem nach der Tiefe zweistufigen Relief des Aufzeichnungsmediums I, d.h. in Übereinstimmung mit den aufgezeichneten Informations-Pits, moduliert. Die Adresse der zu lesenden Informationseinheit wird durch das Positioniersystem ermittelt.

Vor dem Löschen eines Informations-Pits wird die Oberfläche des Aufzeichnungsmediums I entladen. Dazu legt man an die Klemmen 10 und II ein vorzeichenunveränderliches Potentialdifferenz an, dessen Vorzeichen dem der Ladung entgegengesetzt ist. Zur Informationslöschung verschiebt das Positioniersystem den Zylinder 3 nach der gewünschten Adresse, und der modulierte, auf etwa die gleiche Grösse wie die der Informationseinheit lokalisierte Laserstrahl 8 wirkt auf das Aufzeichnungsmedium I ein. Hierbei ist die Energie eines solchen Laserstrahls 8 grösser als die Energie der Erweichung des Werkstoffes des Aufzeichnungsmediums I, aber geringer als die Energie der Zerstörung des Werkstoffes des Aufzeichnungsmediums I.

Realisierungsbeispiel für die Betriebsarten
zur Aufzeichnung und Löschung

Die Dicke des aus Chalkogenidglas ausgeführten
Aufzeichnungsmediums 1 beträgt 60 μm. Das Objektiv 9
fokussiert den Laserstrahlt 8 zu einem Fleck von 1,3 μm
Durchmesser. Die Laserstrahlungsleistung liegt in
einem Bereich von 1 bis 82 mW. Zum Aufladen der
Dünnschlicht des Aufzeichnungsmediums I wurde eine
Koronaentladung bei einer Potentialdifferenz von 18 kV
zwischen den Klemmen 10 und 11 ausgenutzt. Der maximale
Ladestrom überschritt 8 μA nicht. Die Aufladezeit betrug
20 ms. Die Dauer der Licht-Schreibimpulse machte 90 ms
aus. Bei einer Ladung der Schicht des Aufzeichnungsmediums I, die $1,5.10^{-6}$C gleich war, betrug die minimale,
für die fotothermische Aufzeichnung benötigte Strahlungsleistung 6 mW, während bei der entladenen Schicht die
minimale, für die Aufzeichnung benötigte Strahlungsleistung 13 mW betrug. Das Lesen einer Information erfolgte
bei einer Leistung des elektromagnetischen Strahls,
die 1 mW gleich war. Die Selbstentladungsdauer des
Aufzeichnungsmediums I machte $2,8.10^{3}$ s aus. Die Entladung des Aufzeichnungsmediums I wurde durch eine
Koronaentladung bei Anlegen einer 18 kV-Potentialdifferenz
der gegenüber dem Aufladen entgegengesetzten Polarität
an die Klemmen II und I2 beschleunigt. Die lokale Informationslöschung wurde durch Erwärmen des Aufzeichnungsmediums 1 mit einer entfokussierten Laserstrahlung durchgeführt. Der Durchmesser des Lichtflecks auf dem Aufzeichnungsmedium 1 betrug 3,0 μm. Die Löschung erfolgte
mit Hilfe einer Laserstrahlung der Leistung von 39 mW.

Somit werden beim Bringen einer Ladung auf die
Oberfläche des Aufzeichnungsmediums 1 die Oberflächen
energie des Aufzeichnungsmediums 1 geändert, die zur
fotothermischen Aufzeichnung erforderliche Strahlungsleistung herabgesetzt und dadurch Zerstörungen des Werkstoffes des Aufzeichnungsmediums 1 verhindern und die optimalen Bedingungen für die Verformung des Aufzeichnungsmediums I beim fotothermischen Aufzeichnen, Lesen und Löschen einer Information gewährleistet. Das fotothermische Informationsaufzeichnen auf dem geladenen Aufzeichnungsmedium 1 wird bei einer um mehr als das zweifache kleineren Leistung vorgenommen. Die Energie des Laserstrahls 8 bei der Aufzeichnung auf dem geladenen Aufzeichnungsmedium 1 beträgt $4.10^{-10}$ $J/\mu m^2$, was grösser als die Energie der Erweichung des Werkstoffes des Aufzeichnungsmediums 1 (die Energie der Erweichung des Werkstoffes des Aufzeichnungsmediums 1 beträgt $3,2.10^{-10}$ $J/\mu m^2$), aber geringer ist als die Energie der Zerstörung des Werkstoffes des Aufzeichnungsmediums 1, die $6,7.10^{-10}$ $J/\mu m^2$ ausmacht, während die Energie des Laserstrahls 8 bei der Aufzeichnung auf die ungeladenen Schicht, welche $8,7.10^{-10}$ $J/\mu m^2$ gleich ist, die Energie der Zerstörung des Werkstoffes des Aufzeichnungsmediums I übersteigt. Also kann durch das Bringen einer Ladung auf das Aufzeichnungsmedium I die Aufzeichnung eines Informations-Pits in einem optimalen Betrieb ohne Zerstörung des Werkstoffes des Aufzeichnungmediums 1 erfolgen, was die Aufzeichnungszuverlässigkeit wesentlich erhöht und nach dem Löschen die Aufzeichnung vielfach vorzunehmen gestattet.

Das Lesen einer Information wird mittels einer Strahlungseinwirkung mit einer Energie von $0,9.10^{-10}$ $J/\mu m^2$ durchgeführt, die wesentlich geringer als die Energie der Erweichung des Werkstoffes des Aufzeichnungsmediums 1 ist.

Das Informationslöschen erfolgt mit einer Laserstrahlenergie, die $5.10^{-10}$ $J/\mu m^2$ beträgt sowie grösser als die Energie der Erweichung des Wersktoffes des Aufzeichnungsmediums 1 und geringer als die Energie der Zerstörung des Werkstoffes des Aufzeichnungsmediums 1 ist.

Dadurch werden die Zuverlässigkeit beim fotothermischen Aufzeichnen, Lesen und Löschen von Informationen erhöht und möglich, die Information vielfach aufzuzeichnen, die Masse und die Abmessungen der Geräte zum fotothermischen Aufzeichnen, Lesen und Löschen von Informationen verringert.

Gewerbliche Anwendbarkeit

Die Erfindung kann in der Rechentechnik in Bild-und Schallaufzeichnungsgeräten, in Systemen zur Informationsspeicherung und-verarbeitung verwendet werden.

0258459

- 17 -

PATENTANSPRUCH

Verfahren zum fotothermischen Aufzeichnen, Lesen und Löschen von Informationen, bei dem zur Erzeugung einer jeden Informationseinheit aus einer Reihenfolge von Informationseinheiten mit einem nach der Tiefe zweistufigen Relief auf dem Aufzeichnungsmedium, das auf einem Substrat angeordnet ist, im Vorgang der fotothermischen Informationsaufzeichnung sowie zum Lesen und Löschen der Information durch einen modulierten, auf etwa die gleiche Grösse wie die der Informationseinheit - eines Pitslokalisierten elektromagnetischen Strahl (8) auf dieses Aufzeichnungsmedium (I) eingewirkt wird, das aus einem Werkstoff hergestellt ist, der zum Zerfliessen über das Substrat im erweichten Zustand befähigt ist, dadurch g e k e n n z e i c h - n e t , dass vor der fotothermischen Informationsaufzeichnung auf die Oberfläche des Aufzeichnungsmediums (I) eine Ladung gebracht wird, wobei die Einwirkung auf das Aufzeichungsmedium (1) mit dem auf etwa die gleiche Grösse wie die der Informationseinheit lokalisierten elektromagnetischen - Strahl zum fotothermischen Aufzeichnen und Löschen mit einer Energie, die grösser als die Energie der Erweichung des Werkstoffes des Aufzeichnungsmediums (I), aber geringer als die Energie der Zerstörung des Wersktoffes des Aufzeichnungsmediums (I) ist, und zum Lesen der Information mit einer Energie ausgeübt wird, die geringer als die Energie der Erweichung des Werkstoffes des Aufzeichnungsmediums (I) ist, und vor dem Informationslöschen die Oberfläche des Aufzeichnungsmediums (I) entladen wird.

0258459

FIG.1

FIG.2

-2

0258459

FIG.3

FIG.4

| I. | KLASSIFIZIERUNG DES ANMELDUNGSGEGENSTANDS (bei mehreren Klassifikationssymbolen sind alle anzugeben) |

Nach der Internationalen Patentklassifikation (IPC) oder sowohl nach der nationalen Klassifikation als auch nach der IPC

$IPC^4$ – G 11 B 7/00

| II. | RECHERCHIERTE SACHGEBIETE |

Recherchierter Mindestprufstoff[4]

| Klassifikationssystem | Klassifikationssymbole |
|---|---|
| $IPC^4$ | G 11 B 7/00, 7/24 |

Recherchierte nicht zum Mindestprufstoff gehorende Veroffentlichungen, soweit diese
unter die recherchierten Sachgebiete fallen[5]

| III. | ALS BEDEUTSAM ANZUSEHENDE VEROFFENTLICHUNGEN[14] |

| Art + | Kennzeichnung der Veroffentlichung,[16] mit Angabe, soweit erforderlich, der in Betracht kommenden Teile[17] | Betr. Anspruch Nr[18] |
|---|---|---|
| A | US, A, 4403318, (Matsushita Eletric Industrial Co., Ltd.), 06.September 1983 (06.09.83), siehe das Referat | 1 |
| A | US, A, 4330883, (Matsushita Eletric Industrial Co., Ltd.), 18.Mai 1982 (18.05.82), siehe das Referat | 1 |
| A | GB, A, 2121227, (Nigel Geoffrey Ley), 14.Dezember 1983 (14.12.83), siehe Ansprüche, Fig. 1 | 1 |

+ Besondere Arten von angegebenen Veroffentlichungen:[15]

"A" Veroffentlichung, die den allgemeinen Stand der Technik definiert
"E" fruhere Veroffentlichung, die erst am oder nach dem Anmeldedatum erschienen ist
"L" Veroffentlichung, die aus anderen als den bei den ubrigen Arten genannten Grunden angegeben ist
"O" Veroffentlichung, die sich auf eine mundliche Offenbarung, eine Benutzung, eine Ausstellung oder andere Maßnahmen bezieht

"P" Veroffentlichung, die vor dem Anmeldedatum, aber am oder nach dem beanspruchten Prioritatsdatum erschienen ist
"T" Spatere Veroffentlichung die am oder nach dem Anmeldedatum erschienen ist und mit der Anmeldung nicht kollidiert, sondern nur zum Verständnis des der Erfindung zugrundeliegenden Prinzips oder der ihr zugrundeliegenden Theorie angegeben wurde
"X" Veroffentlichung von besonderer Bedeutung

| IV. | BESCHEINIGUNG | |

| Datum des tatsächlichen Abschlusses der Internationalen Recherche[2] | Absendedatum des internationalen Recherchenberichts[2] |
|---|---|
| 04.Mai 1987 (04.05.87) | 20.Mai 1987 (20.05.87) |

| Internationale Recherchenbehorde[1] | Unterschrift des bevollmachtigten Bediensteten[20] |
|---|---|
| ISA/SU | V.V.Belov |